(19) Europäisches Patentamt
European Patent Office
Office européen des brevets

(11) Publication number: 0 684 300 A2

# (12) EUROPEAN PATENT APPLICATION

(21) Application number: 95201250.8

(22) Date of filing: 12.05.95

(51) Int. Cl.[6]: C11D 1/29, C11D 1/14, C11D 1/72

(30) Priority: 27.05.94 GB 9410678

(43) Date of publication of application: 29.11.95 Bulletin 95/48

(84) Designated Contracting States: CH DE ES FR GB IT LI NL SE

(71) Applicant: UNILEVER PLC
Unilever House
Blackfriars
London EC4P 4BO (GB)
(84) GB

(71) Applicant: UNILEVER N.V.
Weena 455
NL-3013 AL Rotterdam (NL)
(84) CH DE ES FR IT LI NL SE

(72) Inventor: Bolzoni, Guiseppe
Via G. Verdi 65
I-20070 S. Rocco Al Porto,
Milano (IT)

(74) Representative: Elliott, Peter William et al
Unilever plc
Patent Division
Colworth House
Sharnbrook
Bedford MK44 1LO (GB)

## (54) Surfactant composition and cleaning composition comprising the same.

(57) A surfactant composition comprising compounds of the general formula:

(1) $R_1.R_2.CH-CH_2-O-(CH_2-CH_2-O)_n-A$

wherein A is $SO_3^-M$ and M is a cation equivalent or A is H, n is 0-15, and wherein $R_1$ and $R_2$ are alkyl with a total chain length of 6-18, CHARACTERISED IN THAT A is not H when n = 0 and more than 60%wt of said component (1) is monobranched. The mono branched ethoxylates and sulphonates according to the invention can be prepared from the corresponding monobranched alcohols by known methods.

EP 0 684 300 A2

## Technical Field

The present invention relates to surfactant compositions and cleaning compositions comprising the same. More specifically, the invention relates to, but is not limited to, liquid 'dishwash' compositions suitable for cleaning hard surfaces such as plates, other crockery, kitchen utensils and the like. While the invention will be described with particular reference to hand dishwashing compositions the invention also extends to fabric washing compositions and other cleaning compositions.

## Background of the Invention

Commercial hand dishwashing compositions typically comprise, as the principal surfactant, one or more surfactants selected from a relatively small group of materials. In particular, principal surfactants are typically selected from amongst primary alcohol sulphates, secondary alkane sulphonates, linear alkyl benzene sulphonate, ethoxylated alcohols and alkyl ether sulphates.

In addition to these principal surfactants it is commonplace for compositions to comprise a so called 'foam-booster', selected from amine oxides, alkanolamides (particularly the mono and di ethanolamides and isopropanolamides) and other nitrogen-based surfactant compounds, including poly-hydroxy amides and betaines.

Compositions also comprise hydrotropes to control solubility of the non aqueous components and/or viscosity, stability or clarity of the products. Known hydrotropes include lower aliphatic alcohols, especially ethanol; urea; lower alkylbenzene sulphonates such sodium toluene or xylene sulphonate; and combinations of these. Hydrotropes should be used in the minimum possible quantities consistent with good formulation properties over a wide temperature range.

Many compositions are known which make use, as the principal surfactant, of ethoxylated alcohol nonionic surfactants of the general formula:

$R\text{-}O\text{-}(CH_2\text{-}CH_2O)_n\text{-}H$

where R is alkyl and n is typically 5-14, or the related alkyl ether sulphates of the general formula:

$R\text{-}O\text{-}(CH_2\text{-}CH_2O)_n\text{-}SO_3^-$

where R is again alkyl and n is typically 1-5.

In typical commercial formulations, some 80% of the surfactant system comprises the ethoxylated alcohols and/or ether sulphates, with the balance of the actives comprising one or more foam-boosters. The overall active concentration on product typically varies from around 20% for 'economy' brands to around 40% for 'concentrated' products.

Commercially available ethoxylated and sulphated alcohols are known to include several surfactant species. Schick's 'Nonionic Surfactants' (Marcel Dekker: 1967) states that both primary and secondary alcohols can be used as starting materials for ethoxylation (see page 86ff), to obtain a range of primary and secondary products.

EP 172742 B1 discloses use in a hand dishwashing composition of an alkyl ether sulphate mixture characterised by having an alkyl chain length range of $C_{10}$-$C_{20}$, a degree of ethoxylation of 2-12, a chain length distribution such that it comprises not more than 20% of $C_{14}$ or longer chains, and a specified branched structure such that at least 30% of the material has $C_2$ or longer alkyl at the 2-position. Such materials are prepared by sulphonation of the corresponding ethoxylated alcohol. In practice, this ethoxylated alcohol raw material is available as 'LIAL 123'(TM) as a mixture of monobranched and linear $C_{12}$-$C_{13}$ synthetic alcohol in the ratio 55:45 of monobranched:linear.

We have now determined that the above-mentioned formulations may be improved upon as regards their fat removal capacity and the level of hydrotrope required may be reduced by use of a specific alkyl ether sulphate.

## Brief Description of the Invention

According to a first aspect of the present invention there is provided a surfactant composition comprising compounds of the general formula:

(1) $R_1.R_2.CH\text{-}CH_2\text{-}O\text{-}(CH_2\text{-}CH_2\text{-}O)_n\text{-}A$

wherein A is $SO_3^-M$ and M is a cation equivalent or A is H, n is 0-15, and wherein $R_1$ and $R_2$ are alkyl with a total chain length of 6-18, CHARACTERISED IN THAT A is not H when n = 0 and more than 60%wt of said component (1) is monobranched.

According to a second aspect of the present invention there is provided an aqueous cleaning composition comprising 10-50%wt of component (1).

## Detailed Description of the Invention

As mentioned above the invention is characterised by the presence of at least 60%wt monobranched surfactant (1) in the composition. Up to 100% monobranched surfactant can be prepared, although this is expensive and it therefore preferable that the level of mono-branching is from 60-95%. Levels of %wt monobranch component within this range can be prepared by mixing a highly monobranched component with a conventional surfactant having a level of around 55% monobranched component.

The monobranched ethoxylates and sulphonates according to the invention can be prepared from the corresponding monobranched alcohols by known methods. These monobranched alcohols have the general formula:

(2) $R_1.R_2.CH\text{-}OH$

wherein $R_1$ and $R_2$ are alkyl with a total chain length of 6-18 and at least 60%wt of said component (1) is monobranched.

These alcohols are prepared in the same manner as the known mixed alcohols (such as LIAL 123) are prepared. However, in the preparation of the monobranched alcohols a molecular sieve is used to separate the monobranched material from the balance of the alcohols, which are linear. The substantially monobranched alcohols are available in the marketplace as the ISALCHEM 123 (TM) series from EniChem (IT).

Generally, the total chain length of the alkyl moiety in the monobranched alcohol will be in the region 9-15. Most preferably the 35-50%wt of the molecules have a $C_{12}$ chain and 50-65%wt of the molecules have a $C_{13}$ chain. These proportions of chain lengths will be found in the ethoxylated and/or sulphonated materials.

Typical levels of the pure monobranched component (1) in end products range from 15-50%wt. It should be understood that many end products can contain a mixture of the monobranched component and linear components. As the conventional alcohols used in the preparation of ethoxylated and/or sulphonated surfactants can comprise up to 55% monobranched species it can be seen that the compositions of the present invention are characterised by a ratio of monobranched to linear species higher than 2:1.

As mentioned above, the degree of ethoxylation can vary from 0 to 15 mole equivalents. Preferably the degree of ethoxylation is 0-5 mole equivalents and is most preferably around one mole equivalent.

Particularly preferred compositions according to the present invention comprise:

(3) $R_1.R_2.CH\text{-}CH_2\text{-}O\text{-}(CH_2\text{-}CH_2\text{-}O)_n\text{-}SO_3^-M$

wherein M is a cation equivalent, n is 0-5, $R_1$ and $R_2$ are alkyl with a total chain length of 6-18, and the ratio of monobranched to linear material is in excess of 2:1.

## Hydrotropes

Hydrotropes are typically present in compositions according to the present invention.

Preferred hydrotropes are lower aliphatic alcohols, especially ethanol; urea; lower alkylbenzene sulphonates such sodium toluene or xylene sulphonate. Urea and ethanol are particularly preferred.

Typical levels of hydrotrope range from 0.5-10%wt.

It is preferable than compositions of the present invention comprises 3-10%wt urea and 0.1-3% ethanol.

It is believed that compositions having a ratio of monobranched to linear surfactants higher than 2:1 require less hydrotrope to be present to achieve a particular viscosity.

## Electrolyte

Magnesium is an preferred component of the formulations according to the present invention.

Preferably, other electrolytes can be present at levels of 0.1-5% by weight of the overall composition. Particularly preferred amongst the electrolytes are alkali metal halides, carbonates, bicarbonates and sulphates. Of these, the most preferred electrolyte is sodium chloride. Sodium chloride is conveniently present at a level of 0.1-5%, as a viscosity modifier.

## Surfactants

As mentioned above, it is essential that at least one of the surfactant components of cleaning compositions according to the present invention comprises the highly monobranced surfactant (1)

The total surfactant level in compositions according to the present invention may vary from around 5% to around 70% on product. Preferred formulations will typically comprise 15-25% or 35-45% active on product.

It is preferable that other surfactant components than (1) are present in cleaning compositions according to the invention.

Particularly suitable surfactant components can be selected from: secondary alkane sulphonates, fatty acid ester sulphonates, dialkyl sulphosuccininates, alpha-olefin sulphonates, primary alkyl sulphates, alkylbenzene sulphonates, alkyl ether sulphates, betaines, amine oxides, ethoxylated alcohols, ethoxylated alkanolamides, ethoxylated alklyphenols, and ethoxylated fatty acid.

In preferred embodiments of the present invention the composition further comprises at least one anionic surfactant. Preferably, the anionic surfactant is selected from alkyl sulphates, alkyl ester sulphonates and mixtures thereof.

The most preferred anionic surfactant is a linear alkyl ether sulphate of the general formula:

$$R_1\text{-}(OCH_2CH_2)_m\text{-}SO_3^-$$

wherein $R_1$ is linear or branched, $C_8$ to $C_{18}$ alkyl and the average degree of ethoxylation m is 1-14, more preferably 1-5, most preferably around 1.

The linear alkyl ether sulphates are mild, high-foaming anionic surfactants which are commercially available in quantity.

Preferred levels of anionic surfactant on product are to some extent determined by the total final concentration of actives in the product. For relatively dilute products levels of anionic preferably range from 13-18% whereas for more concentrated products levels of anionic range from 25-40%.

In preferred embodiments of the invention the composition further comprises a zwitterionic surfactant.

Preferred zwitterionic surfactants include amido betaines and alkyl betaines.

Preferred zwitterionic surfactants are amido betaines of the general formula:

$$R.CONH.CH_2.CH_2.CH_2.\overset{\displaystyle R_6}{\underset{\displaystyle R_7}{\overset{|}{\underset{|}{N^+}}}}\text{—}CH_2CO^-_2$$

wherein

R is straight or branched $C_8$ to $C_{18}$ alkyl,

$R_6$ is $C_1$ to $C_3$ alkyl or $C_1$ to $C_3$ hydroxyalkyl, and

$R_7$ is $C_1$ to $C_3$ alkyl or $C_1$ to $C_3$ hydroxyalkyl;

Preferred levels of zwitterionic surfactant on product are to some extent determined by the total final concentration of actives in the product. For relatively dilute products levels of zwitterionic preferably range from 1-4% whereas for more concentrated products levels of zwitterionic range from 3-9%.

Cocoamidopropyl betaine at a level of 1-9%wt on product is particularly preferred as a zwitterionic surfactant.

It is preferable that both anionic and zwitterionic surfactant are present.

In preferred embodiments of the invention the surfactant system further comprises a nonionic surfactant, most preferably an alcohol ethoxylate, glucamide, gluconamide, sulphoxide or lacto-bionamide.

Typical compositions within the scope of the present invention comprise an overall surfactant system consisting of 70-95%wt of the compound (1), 0-20%wt of the amido betaine and 0-10%wt of a monoethanolamide.

Particularly preferred compositions comprise 35-45%wt surfactant on product such that the overall product comprises:

a) 20-45% alkyl ether sulphate comprising both monobranched and linear ether sulphate in a ratio such that the level of the monobranched component is at least twice that of the linear component,
b) 2-8% coco amido propyl betaine, and,
c) 0-5% alkyl (preferably lauryl) monoethanolamide.

**Minors**

Among other, inessential, ingredients which may also be used in compositions according to the present invention are opacifiers (e.g. ethylene glycol distearate), thickeners (e.g., guar gum), antibacterial agents, antitarnish agents, weak metal chelators (e.g. citrates, glycinates), perfumes, abrasives (e.g. calcites and dolomites) and dyes. The use of strong metal chalating agents with a high affinity for magnesium is discouraged as these will reduce the benefits associated with the presence of magnesium.

Compositions according to the present invention can further comprise a solvent, preferably, when present, at level of 1-15%wt on product, more preferably at a level of 2-7% on product.

Preferably, any solvent present is selected from: propylene glycol mono n-butyl ether, dipropylene glycol mono n-butyl ether, propylene glycol mono t-butyl ether, dipropylene glycol mono t-butyl ether, diethylene glycol hexyl ether, ethyl acetate, methanol, ethanol, isopropyl alcohol, ethylene glycol monobutyl ether, di-ethylene glycol monobutyl ether and mixtures thereof.

Most, preferably the solvent is a glycol ether or $C_2$-$C_5$ alcohol solvent.

Particularly preferred solvents are selected from the group comprising ethanol (preferably as industrial methylated spirits), propylene glycol mono n-butyl ether (available as 'Dowanol PnB' [RTM]) and di-ethylene glycol monobutyl ether (available in the marketplace both as 'Butyl Digol' [RTM] or 'Butyl Carbitol' [RTM]).

A further inessential component is alkylene glycol, typically present at a level of 0-10% on product, irrespective of the overall surfactant concentration. Propylene glycol is particularly suitable as a hydrotrope and/or viscosity modifier and while it is typically present in hand dishwashing compositions known in the art it may be dispensed of in compositions according to the present invention.

Bearing the above in mind typical compositions according to the present invention comprise:

a) 20-45% alkyl ether sulphate comprising both monobranched and linear ether sulphate in a ratio such that the level of the monobranched component is at least twice that of the linear component,
b) 2-8% alkyl (preferably lauryl) amido propyl betaine,
c) 0-5% alkyl (preferably lauryl) monoethanolamide,
d) 0-10% alkylene (preferably propylene) glycol,
e) 0-10% alkanol (preferably ethanol),
f) 0-1% perfume,
g) 0-1% colour,

The present invention is further described with reference to the following non-limiting examples.

**EXAMPLES**

Table 1 below lists formulations of the prior art and an example of the present invention. Comparative examples are identified with an asterisk '*'.

Materials employed as follows:

'AES(mix)': linear alkyl ether sulphate obtained by sulphonation of LIAL 123 (TM) a mixture of monbranched and linear C12-C13 synthetic alcohol in the ratio 55/45 monbranched/linear.

'AES(mono)': 94% primary monobranched linear alkyl ether sulphate (1EO) obtained from the base alcohol IsalChem 123(TM) ex. Enichem Augusta Industriale (Sicily). The alcohol raw material contains less than 0.2%wt hydrocarbons, and has a carbon distribution such that 41% of the alkyl chains are $C_{12}$ and 55%wt are $C_{13}$. The distillation range of the material is 257-287 Celcius.

'Tensiodac': is TENSIODAC D90 M10 (TM ex. DAC), a mixture of linear ether sulphate and lauryl monoethanolamide in a ratio of 70:30 LES:LMEA. The substantially linear ether sulphate in this material is not

believed to be monobranched to a significant extent.

'Anfodac' is ANFODAC LB (TM ex.DAC)is a coco-amidopropyl betaine, amphoteric surfactant.

'P.Glycol' is propylene glycol.

**TABLE 1**

| Example Component | 1* | 2* | 3* | 4* | 5 |
|---|---|---|---|---|---|
| AES(mix) | 26.4 | 26.4 | 26.4 | 26.4 | 0.0 |
| AES(mono) | 0.0 | 0.0 | 0.0 | 0.0 | 26.4 |
| Tensiodac | 6.0 | 6.0 | 6.0 | 6.0 | 6.0 |
| Anfodac | 3.6 | 3.6 | 3.6 | 3.6 | 3.6 |
| Ethanol | 5.0 | 5.0 | 0.0 | 1.0 | 1.0 |
| P. Glycol | 4.0 | 0.0 | 4.0 | 0.0 | 0.0 |
| Water | to 100% | to 100% | to 100% | to 100% | to 100% |
| Viscosity | 200 | 360 | 700 | 1090 | 470 |

Examples 1,2 and 3 show the effect of varying the composition of a commercial HDW liquid (Example 2). This effect is shown in terms of viscosity, measured in mPas at 25 Celcius.

It can be seen that addition of propylene glycol lowers the viscosity of the composition, whereas when propylene glycol is substituted for the ethanol present in the product the viscosity increases. In the absence of propylene glycol but with very low levels of ethanol present the viscosity of the compositions is unacceptably high.

In the embodiment of the invention shown, acceptable viscosity can be obtained with very low levels of ethanol and in the complete absence of propylene glycol.

The formulation of example 5 was compared with that of example 2 in a series of standard tests. In the ASTM D40009 method (a standard method for the evaluation of hand dishwashing compositions the formulation of example 5 showed an improvement in performance of 5% over that of example 2.

## Claims

**1.** Surfactant composition comprising compounds of the general formula:

(1) $R_1.R_2.CH\text{-}CH_2\text{-}O\text{-}(CH_2\text{-}CH_2\text{-}O)_n\text{-}A$

wherein A is $SO_3^-M$ and M is a cation equivalent or A is H, n is 0-15, and wherein $R_1$ and $R_2$ are alkyl with a total chain length of 6-18, CHARACTERISED IN THAT A is not H when n = 0 and more than 60%wt of said component (1) is monobranched.

**2.** Aqueous cleaning composition comprising 10-50%wt of component (1).

**3.** Composition according to claim 1 wherein the total chain length of the alkyl moiety will be in the region 9-15.

**4.** Composition according to claim 1 wherein 35-50%wt of the molecules have a $C_{12}$ chain and 50-65%wt of the molecules have a $C_{13}$ chain.

**5.** Composition according to claim 2 comprising 10-50%wt of the composition according to claim 1.

**6.** Composition according to claim 2 comprising 0.5-10%wt of a hydrotrope.

**7.** Composition according to claim 6 wherein the hydrotropes are selected from lower aliphatic alcohols, urea and lower alkyl-benzene sulphonates.

**8.** Composition according to claim 7 comprising 3-10%wt urea and 0.1-3% ethanol.